(19) Europäisches Patentamt
European Patent Office
Office européen des brevets

(11) **EP 4 693 505 A1**

(12) **EUROPEAN PATENT APPLICATION**
published in accordance with Art. 153(4) EPC

(43) Date of publication:
**11.02.2026 Bulletin 2026/07**

(21) Application number: **24779197.3**

(22) Date of filing: **06.03.2024**

(51) International Patent Classification (IPC):
**H01M 4/62** (2006.01)      **H01M 4/13** (2010.01)
**H01M 4/139** (2010.01)

(52) Cooperative Patent Classification (CPC):
**H01M 4/13; H01M 4/139; H01M 4/62;** Y02E 60/10

(86) International application number:
**PCT/JP2024/008468**

(87) International publication number:
**WO 2024/203062 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023   JP 2023058004**

(71) Applicant: **Zeon Corporation**
**Tokyo 100-8246 (JP)**

(72) Inventors:
• **MIYAZAKI, Akihiko**
**Tokyo 100-8246 (JP)**
• **OGIHARA, Tasuku**
**Tokyo 100-8246 (JP)**

(74) Representative: **Maiwald GmbH**
**Elisenhof**
**Elisenstraße 3**
**80335 München (DE)**

(54) **BINDER POWDER FOR NON-AQUEOUS SECONDARY BATTERY ELECTRODE, POWDER MIXTURE COMPOSITION, ELECTRODE FOR NON-AQUEOUS SECONDARY BATTERY AND MANUFACTURING METHOD THEREFOR, AND NON-AQUEOUS SECONDARY BATTERY**

(57)    A binder powder for a non-aqueous secondary battery electrode, comprising a particulate polymer, wherein: when a measurement test in which the binder powder is hot-pressed to obtain a sheet sample and a surface free energy of the sheet sample is measured is performed, a dispersion component $\gamma_S^d$ and a polar component $\gamma_S^p$ of the surface free energy satisfy the following formula (1):

$$0 \leq \gamma_S^p / \gamma_S^d \leq 2 \quad (1).$$

**EP 4 693 505 A1**

**Description**

Technical Field

The present invention relates to a binder powder for a non-aqueous secondary battery electrode, a mixture powder composition, an electrode for a non-aqueous secondary battery and a production method thereof, and a non-aqueous secondary battery.

Background Art

Electrodes of non-aqueous secondary batteries such as non-aqueous lithium ion secondary batteries are generally produced by a wet process using liquid materials containing solvents. For example, electrodes are produced by mixing an electrode mixture containing an electrode active material and a binder with a solvent to prepare a slurry composition, applying the slurry composition onto a current collector, and then drying (Patent Literature 1).

However, in recent years, production of electrodes by a dry process using powdery materials has attracted attention. As a method for producing electrodes by such a dry process, for example, methods from Patent Literatures 2 and 3 have been known.

Citation List

Patent Literature

Patent Literature 1: International Publication No. 2018/034093 (corresponding publication: specification of U.S. patent application publication No. 2020/0052270)
Patent Literature 2: Japanese Patent No. 6327249
Patent Literature 3: specification of U.S. patent application publication No. 2020/0144591

Summary of The Invention

Technical Problem

From the viewpoint of enhancing battery performances, there is a demand for development of a technique for reducing the internal resistance in a non-aqueous secondary battery produced by a dry process.

The present invention has been devised in view of the above-mentioned problems, and an object of the present invention is to provide a binder powder for a non-aqueous secondary battery electrode and a mixture powder composition with which a non-aqueous secondary battery having a small internal resistance can be obtained; an electrode for a non-aqueous secondary battery with which a non-aqueous secondary battery having a small internal resistance can be obtained and a method for producing the same; and a non-aqueous secondary battery having a small internal resistance.

Solution to Problem

The present inventor has conducted intensive studies to solve the above-mentioned problems. As a result, the present inventor has found that, when a sheet sample obtained by hot pressing a binder powder containing a particulate polymer has a dispersion component and a polar component of a surface free energy that satisfy a particular requirement, the internal resistance of a non-aqueous secondary battery produced using the binder powder can be suppressed, thereby completing the present invention.

That is, the present invention includes the following.

<1> A binder powder for a non-aqueous secondary battery electrode, comprising a particulate polymer, wherein: when a measurement test in which the binder powder is hot-pressed to obtain a sheet sample and a surface free energy of the sheet sample is measured is performed, a dispersion component $\gamma_S^d$ and a polar component $\gamma_S^p$ of the surface free energy satisfy the following formula (1):

$$0 \leq \gamma_S{}^p/\gamma_S{}^d \leq 2 \quad (1).$$

<2> The binder powder for a non-aqueous secondary battery electrode according to <1>, wherein an average primary particle diameter of the particulate polymer is 0.5 $\mu$m or more and 15 $\mu$m or less.

<3> The binder powder for a non-aqueous secondary battery electrode according to <1> or <2>, wherein the dispersion component $\gamma_S{}^d$ and the polar component $\gamma_S{}^p$ of the surface free energy satisfy the following formula (2):

$$0 \leq \gamma_S{}^p/\gamma_S{}^d \leq 0.8 \quad (2).$$

<4> The binder powder for a non-aqueous secondary battery electrode according to any one of <1> to <3>, wherein the polar component $\gamma_S{}^p$ of the surface free energy is 32 mJ/m$^2$ or less.

<5> A mixture powder composition comprising the binder powder for a non-aqueous secondary battery electrode according to any one of <1> to <4>, and an electrode active material.

<6> An electrode for a non-aqueous secondary battery, comprising a current collector, and an electrode active material layer formed of the mixture powder composition according to <5> on the current collector.

<7> A non-aqueous secondary battery comprising the electrode for a non-aqueous secondary battery according to <6>.

<8> A method for producing an electrode for a non-aqueous secondary battery, the method comprising a step of forming an electrode active material layer from the mixture powder composition according to <5> in a dry system.

Advantageous Effects of Invention

According to the present invention, it is possible to provide a binder powder and a mixture powder composition for a non-aqueous secondary battery electrode with which a non-aqueous secondary battery having a small internal resistance can be obtained; an electrode for a non-aqueous secondary battery with which a non-aqueous secondary battery having a small internal resistance can be obtained and a method for producing the same; and a non-aqueous secondary battery having a small internal resistance.

Description of Embodiments

Hereinafter, the present invention will be described in detail with reference to embodiments and examples. However, the present invention is not limited to the embodiments and examples described hereinafter, and may be freely modified for implementation without departing from the scope of claims and the scope of their equivalents.

In the following description, unless otherwise specified, the electrode active material layer refers to a layer containing an electrode active material, the positive electrode active material layer refers to an electrode active material layer for a positive electrode, and the negative electrode active material layer refers to an electrode active material layer for a negative electrode.

In the following description, unless otherwise specified, the term "(meth)acrylic acid" encompasses acrylic acid, methacrylic acid, and combinations thereof. Also, unless otherwise specified, the term "(meth)acrylate" encompasses acrylates, methacrylates, and combinations thereof. Furthermore, unless otherwise specified, the term "(meth)acrylonitrile" encompasses acrylonitrile, methacrylonitrile, and combinations thereof.

<Binder powder>

A binder powder according to an embodiment of the present invention includes a particulate polymer. The binder powder may contain only a particulate polymer. The binder powder may be a powder in a dry state and may have a powdery form when in a normal temperature environment (generally, in an environment at 25°C).

When a measurement test in which the binder powder is hot-pressed to obtain a sheet sample and a surface free energy of the sheet sample is measured is performed, a dispersion component $\gamma_S{}^d$ and a polar component $\gamma_S{}^p$ of the surface free energy satisfy the following formula (1), and preferably satisfy the following formula (2).

$$0 \leq \gamma_S{}^p/\gamma_S{}^d \leq 2 \quad (1)$$

$$0.0 \leq \gamma_S{}^p / \gamma_S{}^d \leq 0.8 \quad (2)$$

Specifically, the ratio "$\gamma_S{}^p/\gamma_S{}^d$" between the dispersion component $\gamma_S{}^d$ and the polar component $\gamma_S{}^p$ is usually 0.00 or more, preferably 0.01 or more, and more preferably 0.02 or more, and is usually 2.00 or less, preferably 1.00 or less, and still more preferably 0.80 or less.

By using the binder powder of the present embodiment that satisfies the above-mentioned requirements, a non-aqueous secondary battery having a small internal resistance can be obtained. Without being bound by any particular theory, the present inventor infers that the mechanism for obtaining such an excellent effect is as follows. However, the technical scope of the present invention is not limited by the mechanism described below.

The surface free energy of the sheet sample obtained in the measurement test has a correlation with a surface free energy of the particulate polymer contained in the binder powder as a raw material of the sheet sample. Thus, the dispersion component $\gamma_S{}^d$ and the polar component $\gamma_S{}^p$ of the surface free energy of the sheet sample may indirectly represent a dispersion component and a polar component of the surface free energy of the particulate polymer contained in the binder powder. When the dispersion component $\gamma_S{}^d$ and the polar component $\gamma_S{}^p$ of the surface free energy of the sheet sample obtained in the above-described measuring test satisfy the above-described requirement, the particulate polymer contained in the binder powder can have an appropriate affinity for an electrode active material and an electroconductive material. Therefore, since the electrode active material and the electroconductive material and the binder powder can be mixed with high uniformity in the production process of the mixture powder composition, aggregation and uneven distribution of the particulate polymer contained in the binder powder is suppressed. Therefore, in the step of forming an electrode active material layer of the mixture powder composition, it is possible to suppress a phenomenon where the formation of an electroconductive path formed by the electrode active material and the electroconductive material is hindered by an aggregated or unevenly distributed particulate polymer. Therefore, since the electroconductive path can be smoothly formed in the electrode active material layer, the internal resistance of the non-aqueous secondary battery can be reduced.

The measurement test of the surface free energy of the sheet sample is performed as follows.

The measurement test of the surface free energy includes hot pressing the binder powder to obtain a sheet sample. The pressing temperature of the hot pressing is usually 200°C, the pressing pressure is usually 4.5 kN, and the pressing time is 1 minute.

After the sheet sample has been prepared, using a liquid having known dispersion component $\gamma_L{}^d$ and polar component $\gamma_L{}^p$ of the surface free energy, the contact angle of the liquid with respect to the surface of the sheet sample is measured. As such a liquid, for example, water, formamide and ethylene glycol may be used. Specifically, a droplet of the liquid is dropped onto the surface of the sheet sample, and the contact angle is measured by the $\theta/2$ method. The measurement may be performed at 25°C and 1 atm in the atmosphere.

The measured contact angle of the liquid is used to calculate the dispersion component $\gamma_S{}^d$ and the polar component $\gamma_S{}^p$ (unit: mJ/m$^2$) of the surface free energy of the sheet sample by the OWRK method (Owens-Wendt-Rabel-Kaelble method).

In the OWRK method, it is assumed that the surface free energy is splitted into a dispersion component d and a polar component p. Therefore, the surface free energy $\gamma_L$ of a liquid is expressed as the sum of the dispersion component $\gamma_L{}^d$ and the polar component $\gamma_L{}^p$, as expressed by the following equation (X1). In addition, the surface free energy $\gamma_S$ of a solid is expressed as the sum of the dispersion component $\gamma_S{}^d$ and the polar component $\gamma_S{}^p$, as expressed by the following equation (X2). When a liquid adheres to a solid, the adhesion work $W_{LS}$ is expressed by the following equation (X3). According to Young-Dupre equation, the adhesion work $W_{LS}$ is expressed by the following equation (X4) using the contact angle $\theta c$ of the liquid with respect to the solid. Therefore, the following equation (X5) holds. Therefore, the contact angles $\theta c$ of liquids (for example, water, formamide, and ethylene glycol), of which the dispersion component $\gamma_L{}^d$ and the polar component $\gamma_L{}^p$ of the surface free energy $\gamma_L$ are known, are applied to the equation (X5) to thereby solve the simultaneous equations, and as a result the dispersion component $\gamma_S{}^d$ and the polar component $\gamma_S{}^p$ of the surface free energy $\gamma_S$ of the sheet sample corresponding to the solid can be calculated. OWRK method, also referred to as Kaelble-Uy method, may refer to "Kaelble,D.H., Uy,K.C., J. Adhesion, 2, p50, (1970).

[Mathematical formula 1]

$$\gamma_L = \gamma_L{}^d + \gamma_L{}^p \quad (X1)$$
$$\gamma_S = \gamma_S{}^d + \gamma_S{}^p \quad (X2)$$
$$W_{LS} = 2\sqrt{\gamma_L{}^d \gamma_S{}^d} + 2\sqrt{\gamma_L{}^p \gamma_S{}^p} \quad (X3)$$
$$W_{LS} = \gamma_L(1 + \cos\theta_c) \quad (X4)$$
$$\sqrt{\gamma_L{}^d \gamma_S{}^d} + \sqrt{\gamma_L{}^p \gamma_S{}^p} = \frac{\gamma_L(1 + \cos\theta_c)}{2} \quad (X5)$$

Specifically, the measurement test of the surface free energy of the sheet sample may be performed by the method described in <Measurement test of surface free energy> of Examples described later.

The surface free energy $\gamma_S$ of the sheet sample and the polar component $\gamma_S{}^p$ and the dispersion component $\gamma_S{}^d$ thereof may be adjusted according to the composition of the monomers of the particulate polymer.

It is preferable that the polar component $\gamma_S{}^p$ of the surface free energy of the sheet sample falls within a particular range. Specifically, the polar component $\gamma_S{}^p$ is preferably 0.0 mJ/m$^2$ or more, more preferably 0.1 mJ/m$^2$ or more, and still more preferably 0.5 mJ/m$^2$ or more, and is preferably 32 mJ/m$^2$ or less, more preferably 28 mJ/m$^2$ or less, and still more preferably 24 mJ/m$^2$ or less. When the polar component $\gamma_S{}^p$ is within the above-described range, the internal resistance of the non-aqueous secondary battery can be effectively reduced.

It is preferable that the dispersion component $\gamma_S{}^d$ of the surface free energy of the sheet sample falls within a particular range. Specifically, the dispersion component $\gamma_S{}^d$ is preferably 8 mJ/m$^2$ or more, more preferably 12 mJ/m$^2$ or more, and still more preferably 16 mJ/m$^2$ or more, and is preferably 40 mJ/m$^2$ or less, more preferably 36 mJ/m$^2$ or less, and still more preferably 32 mJ/m$^2$ or less. When the dispersion component $\gamma_S{}^d$ is within the above-described range, the internal resistance of the non-aqueous secondary battery can be effectively reduced.

It is preferable that the surface free energy $\gamma_S$ of the sheet sample falls within a particular range. Specifically, the surface free energy $\gamma_S$ is preferably 10 mJ/m$^2$ or more, more preferably 15 mJ/m$^2$ or more, and still more preferably 20 mJ/m$^2$ or more, and is preferably 60 mJ/m$^2$ or less, more preferably 50 mJ/m$^2$ or less, and still more preferably 40 mJ/m$^2$ or less. When the surface free energy $\gamma_S$ is within the above-described range, the internal resistance of the non-aqueous secondary battery can be effectively reduced.

The particulate polymer contained in the binder powder may be a primary particle in which particles of the particulate polymer are not aggregated, a secondary particle formed by aggregation of a plurality of particles of the particulate polymer, or a combination of the primary particles and the secondary particles.

It is preferable that the average primary particle diameter of the particulate polymer falls within a particular range. Specifically, the range of the average primary particle diameter of the particulate polymer is preferably 0.1 μm or more, more preferably 0.5 μm or more, and still more preferably 1.0 μm or more, and is preferably 50 μm or less, more preferably 30 μm or less, and still more preferably 15 μm or less. When the average primary particle diameter of the particulate polymer is within the above-described range, the internal resistance of the non-aqueous secondary battery can be effectively reduced.

The average primary particle diameter of the particulate polymer can be measured by the following method. An 1% aqueous solution of sodium linear alkylbenzene sulfonate and the particulate polymer are mixed and dispersed by ultrasonic waves to obtain a dispersion liquid in which primary particles of the particulate polymer are dispersed. A cumulative particle diameter distribution of the dispersion liquid is measured by a Coulter counter. The particle diameter at which the integrated value obtained by integrating from the small diameter side of the cumulative particle diameter distribution becomes 50% can be obtained as the average primary particle diameter based on the volume of the particulate polymer. As a specific measurement method, a method described in <Method for measuring average primary particle diameter D50 of particulate polymer contained in binder powder> of Example described later may be adopted.

It is preferable that the particulate polymer contains an aromatic monovinyl monomer unit. The aromatic monovinyl monomer unit refers to a structural unit having a structure formed by polymerizing an aromatic monovinyl monomer. Examples of the aromatic monovinyl monomer may include styrene, α-methylstyrene, and vinyltoluene. Among these, styrene is preferable. As the aromatic monovinyl monomer units, one type thereof may be solely contained in the particulate polymer, and two or more types thereof may also be contained in combination.

The ratio of the aromatic monovinyl monomer unit in the particulate polymer is preferably 45% by weight or more, more preferably 50% by weight or more, and still more preferably 55% by weight or more, and is preferably 99.5% by weight or less, more preferably 95% by weight or less, and still more preferably 90% by weight or less. The ratio of the aromatic monovinyl monomer unit in the particulate polymer is usually the same as the weight ratio (the charging ratio of the aromatic monovinyl monomer) of the aromatic monovinyl monomer with respect to the total weight of the monomers used in producing the particulate polymer.

The particulate polymer preferably contains a (meth)acrylic acid alkyl ester monomer unit. The (meth)acrylic acid alkyl ester monomer unit refers to a structural unit having a structure formed by polymerizing a (meth)acrylic acid alkyl ester monomer. The (meth)acrylic acid alkyl ester monomer encompasses an acrylic acid alkyl ester monomer, a methacrylic acid alkyl ester monomer, and combinations thereof. Examples of the (meth)acrylic acid alkyl ester monomer may include an acrylic acid alkyl ester monomer such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and a methacrylic acid alkyl ester monomer such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Among these, a (meth)acrylic acid alkyl ester monomer of which the alkyl group that is bonded to non-carbonyl oxygen atoms has 4 or more carbon atoms is preferable. A (meth)acrylic acid alkyl ester monomer of which the alkyl group that is bonded to non-carbonyl oxygen atoms has 6 or more and 20 or less carbon atoms is more preferable. As the (meth)acrylic acid alkyl ester monomer units, one type thereof may be solely contained in the particulate polymer, and two or more types thereof may also be contained in combination.

The ratio of the (meth)acrylic acid alkyl ester monomer unit in the particulate polymer is preferably 0% by weight or more, more preferably 2% by weight or more, and still more preferably 5% by weight or more, and is preferably 95% by weight or less, more preferably 85% by weight or less, and still more preferably 75% by weight or less. The ratio of the (meth)acrylic acid alkyl ester monomer unit in the particulate polymer is usually the same as the weight ratio (the charging ratio of the (meth)acrylic acid alkyl ester monomer) of the (meth)acrylic acid alkyl ester monomer with respect to the total weight of the monomers used in producing the particulate polymer.

The particulate polymer preferably contains a crosslinkable monomer unit. The crosslinkable monomer unit refers to a structural unit having a structure formed by polymerizing a crosslinkable monomer. The crosslinkable monomer refers to a monomer capable of forming a crosslinked structure when polymerized. Examples of the crosslinkable monomer may include a monomer having two or more reactive groups per one molecule. Specific examples of the crosslinkable monomer may include a monofunctional crosslinkable monomer having a crosslinkable group that is thermally crosslinkable and one olefinic double bond per one molecule; and a multifunctional crosslinkable monomer having two or more olefinic double bonds per one molecule.

Examples of the crosslinkable group that is thermally crosslinkable contained in the crosslinkable monomer may include an epoxy group, an N-methylolamido group, an oxetanyl group, an oxazoline group, and combinations thereof. Among these, an epoxy group is preferable. Examples of the monofunctional crosslinkable monomer having an epoxy group as the crosslinkable group that is thermally crosslinkable and an olefinic double bond may include: an unsaturated glycidyl ether such as vinyl glycidyl ether, allyl glycidyl ether, butenyl glycidyl ether, and o-allylphenyl glycidyl ether; monoepoxide of diene or polyene such as butadiene monoepoxide, chloroprene monoepoxide, 4,5-epoxy-2-pentene, 3,4-epoxy-1-vinylcyclohexene, and 1,2-epoxy-5,9-cyclododecadiene; an alkenyl epoxide such as 3,4-epoxy-1-butene, 1,2-epoxy-5-hexene, and 1,2-epoxy-9-decene; and an unsaturated carboxylic acid glycidyl ester such as glycidyl acrylate, glycidyl methacrylate, glycidyl crotonate, glycidyl-4-heptenoate, glycidyl sorbate, glycidyl linolate, glycidyl-4-methyl-3-pentenoate, a glycidyl ester of 3-cyclohexene carboxylic acid, and a glycidyl ester of 4-methyl-3-cyclohexene carboxylic acid. Among these, an unsaturated glycidyl ether and a glycidyl ester of an unsaturated carboxylic acid are preferable. Allyl glycidyl ether and glycidyl methacrylate are more preferable, and glycidyl methacrylate is still more preferable.

The ratio of the monofunctional crosslinkable monomer unit in the particulate polymer is preferably 0% by weight or more, more preferably 2% by weight or more, and still more preferably 5% by weight or more, and is preferably 25% by weight or less, more preferably 22% by weight or less, and still more preferably 20% by weight or less. The monofunctional crosslinkable monomer unit refers to a structural unit having a structure formed by polymerizing a monofunctional crosslinkable monomer. The ratio of the monofunctional crosslinkable monomer unit in the particulate polymer is usually the same as the weight ratio (the charging ratio of the monofunctional crosslinkable monomer) of the monofunctional crosslinkable monomer with respect to the total weight of the monomers used in producing the particulate polymer.

Examples of the polyfunctional crosslinkable monomer having 2 or more olefinic double bonds may include allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, trimethylolpropane-tri(meth)acrylate, dipropylene glycol diallyl ether, polyglycol diallyl ether, triethylene glycol divinyl ether, hydroquinone diallyl ether, tetraallyloxyethane, trimethylolpropane-diallyl ether, allyl or vinyl ether of polyfunctional alcohols other than the above, triallylamine, methylenebisacrylamide, and divinylbenzene. Among these, ethylene di(meth)acrylate, ethylene glycol di(meth)acrylate, and divinylbenzene are preferable. Ethylene glycol di(meth)acrylate is more preferable, and ethylene glycol dimethacrylate is still more preferable.

The ratio of the polyfunctional crosslinkable monomer unit in the particulate polymer is preferably 0% by weight or more, more preferably 0.1% by weight or more, and still more preferably 0.2% by weight or more, and is preferably 10% by weight or less, more preferably 8% by weight or less, and still more preferably 5% by weight or less. The polyfunctional crosslinkable monomer unit refers to a structural unit having a structure formed by polymerizing a polyfunctional crosslinkable monomer. The ratio of the polyfunctional crosslinkable monomer unit in the particulate polymer is usually the same as the weight ratio (the charging ratio of the polyfunctional crosslinkable monomer) of the polyfunctional crosslinkable monomer with respect to the total weight of the monomers used in producing the particulate polymer.

As the crosslinkable monomer units, one type thereof may be solely contained in the particulate polymer, and two or more types thereof may also be contained in combination.

The ratio of the crosslinkable monomer unit in the particulate polymer is preferably 0% by weight or more, more preferably 0.1% by weight or more, and still more preferably 0.2% by weight or more, and is preferably 25% by weight or less, more preferably 22% by weight or less, and still more preferably 20% by weight or less. The ratio of the crosslinkable monomer unit in the particulate polymer is usually the same as the weight ratio (the charging ratio of the crosslinkable monomers) of the crosslinkable monomers with respect to the total weight of the monomers used in producing the particulate polymer.

The particulate polymer may contain a cyano group-containing monomer unit. The cyano group-containing monomer unit refers to a structural unit having a structure formed by polymerizing a cyano group-containing monomer. As the cyano group-containing monomer, an ethylenically unsaturated compound having a cyano group may be used. Examples of the cyano group-containing monomer may include acrylonitrile; $\alpha$-halogenoacrylonitrile such as $\alpha$-chloroacrylonitrile and $\alpha$-bromoacrylonitrile; and $\alpha$-alkylacrylonitrile such as methacrylonitrile. As the cyano group-containing monomer units, one type thereof may be solely contained in the particulate polymer, and two or more types thereof may also be contained in combination.

The ratio of the cyano group-containing monomer unit in the particulate polymer is preferably 5% by weight or more, more preferably 10% by weight or more, and still more preferably 15% by weight or more, and is preferably 95% by weight or less, more preferably 90% by weight or less, and still more preferably 80% by weight or less. The ratio of the cyano group-containing monomer unit in the particulate polymer is usually the same as the weight ratio (the charging ratio of the cyano group-containing monomer) of the cyano group-containing monomer with respect to the total weight of the monomers used in producing the particulate polymer.

The particulate polymer may contain an ethylenically unsaturated carboxylic acid monomer unit. The ethylenically unsaturated carboxylic acid monomer unit refers to a structural unit having a structure formed by polymerizing an ethylenically unsaturated carboxylic acid monomer. Examples of the ethylenically unsaturated carboxylic acid monomer may include acrylic acid, methacrylic acid, maleic acid, fumaric acid, and itaconic acid. As the ethylenically unsaturated carboxylic acid monomer units, one type thereof may be solely contained in the particulate polymer, and two or more types thereof may also be contained in combination.

The ratio of the ethylenically unsaturated carboxylic acid monomer unit in the particulate polymer is preferably 0.1% by weight or more, more preferably 0.5% by weight or more, and still more preferably 1% by weight or more, and is preferably 10% by weight or less, more preferably 7% by weight or less, and still more preferably 5% by weight or less. The ratio of the ethylenically unsaturated carboxylic acid monomer unit in the particulate polymer is usually the same as the weight ratio (the charging ratio of the ethylenically unsaturated carboxylic acid monomer) of the ethylenically unsaturated carboxylic acid monomer with respect to the total weight of the monomers used in producing the particulate polymer.

The particulate polymer may contain an ethylenically unsaturated amide monomer unit. The ethylenically unsaturated amide monomer unit refers to a structural unit having a structure formed by polymerizing an ethylenically unsaturated amide monomer. Examples of the ethylenically unsaturated amide monomer may include (meth)acrylamide, N-methylol (meth)acrylamide, and N,N'-dimethylol (meth)acrylamide. As the ethylenically unsaturated amide monomer units, one type thereof may be solely contained in the particulate polymer, and two or more types thereof may also be contained in combination.

It is preferable that the particulate polymer has a glass transition temperature Tg within a particular range. The range of the glass transition temperature Tg of the particulate polymer is preferably 10°C or higher, more preferably 20°C or higher, and still more preferably 35°C or higher, and is preferably 130°C or lower, more preferably 120°C or lower, and still more preferably 100°C or lower. When the glass transition temperature Tg of the particulate polymer falls within the above-mentioned range, the internal resistance of the non-aqueous secondary battery can be effectively reduced.

The glass transition temperature Tg of the particulate polymer may be measured using a differential scanning calorimeter according to JIS K 7121:1987 under condition of a rate of temperature increase of 20°C/minute.

It is preferable that the shape of the primary particles of the particulate polymer is spherical. The spherical shape of the particles means that the sphericity of the particles is 80% or more. When the primary particles of the particulate polymer are spherical, the binder powder can have high fluidity. The sphericity is expressed as a value represented by (1 - (Ll - Ls)/La) × 100. Herein, Ls represents a minor axis diameter, Ll represents a major axis diameter, and La represents (Ls + Ll)/2. The minor axis diameter Ls and major axis diameter Ll of the particulate polymer may be measured based on photographic images taken using a transmission electron microscope or a scanning electron microscope. It is preferable to use the respective averages of the major axis diameters and minor axis diameters of 10 to 30 primary particles of the particulate polymer as the values of Ls and Ll described above.

As described above, the particulate polymer contained in the binder powder may be primary particles, secondary particles, or a combination thereof. Thus, for example, the particulate polymer contained in the binder powder may exist as an aggregate (secondary particles) having a shape in which a plurality of primary particles are bonded. The primary particles of the particulate polymer may exist as separate independent particles, or a plurality of primary particles may form one secondary particle by forming bonds via a bonding force such as an intermolecular force while maintaining the shape thereof. In addition, the secondary particles that are formed by the plurality of primary particles may be crushed by an external force, so that primary particles may exist as separate independent particles. In general, the binder powder containing the particulate polymer as such primary particles or secondary particles can have fluidity.

The particulate polymer may be water soluble or water insoluble. The term "water soluble" as a descriptor of a material means that, when 0.5 g of the material is dissolved in 100 g water at 25°C, the insoluble content of the material is less than 0.5% by weight. In addition, the term "water insoluble" as a descriptor of a material means that, when 0.5 g of the material is dissolved in 100 g water at 25°C, the insoluble content of the material is 90% by weight or more.

All or most of the binder powder is composed of the particulate polymer described above. Specifically, the amount of the particulate polymer is preferably 95% by weight to 100% by weight, more preferably 97% by weight to 100% by weight, still more preferably 99% by weight to 100% by weight, and particularly preferably 100% by weight, relative to 100% by weight of the total amount of the binder powder. When the content of the particulate polymer in the binder powder is large as described above, the internal resistance of the non-aqueous secondary battery can be effectively reduced.

As long as the advantageous effects of the present invention is not significantly impaired, the binder powder may contain any optional components other than the particulate polymer. Examples of the optional components may include a polymerization additive such as a surfactant, an emulsifier, a dispersion stabilizer, a polymerization initiator and a chain transfer agent used for polymerization of the particulate polymer. However, it is preferable that the amount of the optional component is small, and it is more preferable that the binder powder does not contain the optional component.

The binder powder may contain a solvent or may not contain a solvent. Herein, the solvent refers to a liquid component in a normal temperature environment (generally, in an environment at 25°C). Examples of the solvent may include water. Preferably, the binder powder may be a powder in a dry state and thus, it is preferable that a solvent is not substantially contained. The amount of the solvent contained in the binder powder is preferably 0% by weight to 5% by weight, more preferably 0% by weight to 1% by weight, still more preferably 0% by weight to 0.5% by weight, still more preferably 0% by weight to 0.1% by weight, and particularly preferably less than 0.1% by weight.

The volatile content of the binder powder at 120°C is preferably less than 1% by weight from the viewpoint of increasing the fluidity of the binder powder and increasing the uniformity of the thickness of the electrode active material layer. The volatile content of the binder powder at 120°C may be measured by the following method. The binder powder is placed in an oven set at 120°C. The weight of the binder powder is measured every 10 minutes, and the measurement is completed when the weight change becomes less than 0.1%. The weight change ratio (decreasing amount) from the initial weight of the binder powder to the weight at the end of measurement can be determined as the volatile content at 120°C.

The method for producing the binder powder is not particularly limited. For example, the binder powder may be produced by a method including a step of producing a particulate polymer.

The particulate polymer can be produced by a process including polymerizing monomers. There is no particular limitation on the method for polymerizing the monomers. Examples of the polymerization methods may include a solution polymerization method, a suspension polymerization method, a bulk polymerization method, and an emulsion polymerization method. Among these, a suspension polymerization method and an emulsion polymerization method are preferable.

In the polymerization method described above, generally, a monomer composition containing the monomers described above may be polymerized in a reaction solvent to produce the particulate polymer. In this case, the ratio of each monomer in the monomer composition is usually the same as the ratio of the corresponding structural unit in the particulate polymer. The polymerization may be performed in a reaction system containing a polymerization additive, such as a surfactant, an emulsifier, a dispersant, a polymerization initiator, and a chain transfer agent. As a specific example, in a suspension polymerization method (including a fine suspension polymerization method), an aqueous dispersion of the particulate polymer may be obtained by using a dispersant such as polyvinyl alcohol or magnesium hydroxide. For example, in the emulsion polymerization method, a latex (aqueous dispersion) of the particulate polymer may be obtained by using an emulsifier such as sodium dodecylbenzene sulfonate.

The method for producing the binder powder may include a step of drying the particulate polymer after the particulate polymer is produced. Preferably, after the produced particulate polymer is washed and/or purified by suitable methods, the drying of the particulate polymer is performed. In many cases, the polymerization of the particulate polymer is performed in water. Therefore, a method capable of smoothly removing water is preferable as a drying method. Furthermore, the drying method is more preferably a method in which the primary particles of the particulate polymer can be dried in a manner that achieves a redispersible state without excessive adhesion between the particles. Specific examples of the drying method may include a method of spray-drying an aqueous dispersion of the particulate polymer; and a method of drying with a rotary evaporator. Furthermore, it is more preferable to dry the particulate polymer under a vacuum condition after performing spray drying or drying with a rotary evaporator as described above.

The drying temperature is preferably lower than the minimum film forming temperature of the particulate polymer from the viewpoint of suppressing excessive adhesion between the primary particles of the particulate polymer and performing drying in a manner that achieves a redispersible state. The minimum film forming temperature of the particulate polymer is preferably 35°C to 100°C from the viewpoint of drying the particulate polymer in a manner that achieves a redispersible state to improve fluidity of the binder powder.

The minimum film forming temperature of the particulate polymer refers to the lowest temperature at which a film of the particulate polymer can be formed. The minimum film forming temperature can be measured, for example, according to JIS K6828-2(2003) or ISO 2115. Specifically, an aqueous dispersion liquid of the particulate polymer is applied and dried onto a flat plate such as an iron plate having a suitable temperature gradient to have a thickness of about 100 $\mu$m, and a boundary temperature between a portion where a film is formed and a portion where a film is not formed is measured. Herein, since the film-formed portion becomes transparent and the non-film-formed portion becomes cloudy, the boundary between the film-formed portion and the non-film-formed portion can be visually confirmed. In addition, when the flat plate is rubbed after the aqueous dispersion of the particulate polymer is applied and dried, the non-film-formed portion generates powder. Therefore, the boundary between the film-formed portion and the non-film-formed portion can be determined based on the presence or absence of the generated powder. The minimum film forming temperature can be measured, for example, by performing a test using a minimum film forming temperature instrument(MFFTB90 manufactured by Rohpoint Instruments Ltd.) according to ISO 2115.

The method for producing a binder powder preferably includes, after producing a particulate polymer and drying the particulate polymer as necessary, a step of classifying the particulate polymer. Although there is no limitation on the classification method, it is preferable to perform classification by a filtration method using a filter. Among these, from the viewpoint of smoothly performing classification, it is more preferable to perform filtration using a vibrating sieve such as an ultrasonic sieve.

<Mixture powder composition>

A mixture powder composition according to an embodiment of the present invention includes the binder powder described above and an electrode active material. The mixture powder composition can be a powder composition in a dry state and can have a powdery form when in a normal temperature environment (generally, in an environment at 25°C). With this mixture powder composition, non-aqueous secondary batteries that have a small internal resistance can be obtained.

In the mixture powder composition, the particulate polymer included in the binder powder and the electrode active material are both in a particulate state. In the mixture powder composition, each of the particulate polymer and the electrode active material may exist as separate independent particles. In the mixture powder composition, one or a plurality of particulate polymers may adhere onto the surface of the particles of the electrode active material to form composite particles. In the mixture powder composition, a plurality of particles of the particulate polymer and the electrode active material and the composite particles may be bonded to form secondary particles while maintaining their particle shapes. Usually, such secondary particles can be returned to individually independent particles (particulate polymer, electrode active material, or composite particles) by being smoothly crushed when subjected to an external force, and thus the mixture powder composition can have high fluidity.

The binder powder included in the mixture powder composition is as described above. The amount of the binder powder relative to 100% by weight of the mixture powder composition is preferably 0.5% by weight or more, more preferably 1.0% by weight or more, and still more preferably 1.5% by weight or more, and is preferably 10% by weight or less, more preferably 6% by weight or less, and still more preferably 4% by weight or less. When the amount of the binder powder falls within the above-described range, the internal resistance of the non-aqueous secondary battery can be effectively reduced.

In addition, as described above, all or most of the binder powder is usually the particulate polymer. Therefore, the range of the amount of the particulate polymer relative to 100% by weight of the mixture powder composition may be the same as the range of the amount of the binder powder relative to 100% by weight of the mixture powder composition.

As the electrode active material, a material corresponding to the type of the non-aqueous secondary battery may be used. For example, in the case where the non-aqueous secondary battery is a lithium ion secondary battery, the electrode active material may be a material capable of reversibly intercalating or deintercalating lithium ions by applying an electric potential in an electrolyte solution. Such an electrode active material may be classified into a positive electrode active material serving as an electrode active material for a positive electrode and a negative electrode active material serving as an electrode active material for a negative electrode.

As a positive electrode active material for a lithium ion secondary battery, an active material capable of doping and dedoping lithium ions is used, and examples thereof may include a positive electrode active material formed of an inorganic compound, a positive electrode active material formed of an organic compound, and a composite material obtained by combining these materials.

Examples of the positive electrode active material formed of an inorganic compound may include a transition metal oxide, a transition metal sulfide, and a lithium-containing composite metal oxide containing lithium and a transition metal. As the transition metal described above, for example, Ti, V, Cr, Mn, Fe, Co, Ni, Cu, or Mo is used.

Examples of the transition metal oxide may include $MnO$, $MnO_2$, $V_2O_5$, $V_6O_{13}$, $TiO_2$, $Cu_2V_2O_3$, amorphous $V_2OP_2O_5$, and $MoO_3$. Among these, $MnO$, $V_2O_5$, $V_6O_{13}$, and $TiO_2$ are preferable from the viewpoint of cycle stability and capacity.

Examples of the transition metal sulfide may include $TiS_2$, $TiS_3$, amorphous $MoS_2$, and $FeS$.

Examples of the lithium-containing composite metal oxide may include a lithium-containing composite metal oxide having a layered structure, a lithium-containing composite metal oxide having a spinel structure, and a lithium-containing composite metal oxide having an olivine-type structure. Examples of the lithium-containing composite metal oxide having a layered structure may include a lithium-containing cobalt oxide ($LiCoO_2$), a lithium-containing nickel oxide ($LiNiO_2$), a Co-Ni-Mn lithium composite oxide, a Ni-Mn-Al lithium composite oxide, and a Ni-Co-Al lithium composite oxide. Examples of the lithium-containing composite metal oxide having a spinel structure may include lithium manganate ($LiMn_2O_4$), and $Li[Mn_{3/2}M^1_{1/2}]O_4$ (wherein $M^1$ represents a transition metal other than Mn, such as Cr, Fe, Co, Ni and Cu) in which part of Mn is substituted with another transition metal. Examples of the lithium-containing composite metal oxide having an olivine-type structure may include olivine-type lithium phosphate compounds represented by $Li_xM^2PO_4$ (in the formula, $M^2$ represents at least one element selected from the group consisting of Mn, Fe, Co, Ni, Cu, Mg, Zn, V, Ca, Sr, Ba, Ti, Al, Si, B, and Mo, and X represents a number satisfying $0 \leq X \leq 2$).

Examples of the positive electrode active material formed of an organic compound may include electroconductive macromolecules such as polyacetylene and poly-p-phenylene.

Furthermore, for example, a composite material covered with a carbon material may be produced by reduction firing of an iron-based oxide in the presence of a carbon source material, and the resulting composite material may be used as a positive electrode active material. Although iron-based oxides tend to have poor electroconductivity, the composite material produced as described above can be used as a high-performance positive electrode active material.

As the positive electrode active materials, one type thereof may be solely used, and two or more types thereof may also be used in combination. Furthermore, a mixture of the inorganic compound and the organic compound described above may be used as the positive electrode active material.

Examples of the negative electrode active material for a lithium ion secondary battery may include a carbonaceous material such as amorphous carbon, graphite, natural graphite, mesocarbon microbeads, and pitch-based carbon fibers; an electroconductive macromolecule such as polyacene; metal such as silicon, tin, zinc, manganese, iron, and nickel, or alloys thereof; an oxide or sulfate of the metal or alloy described above; metal lithium; a lithium alloy such as Li-Al, Li-Bi-Cd, and Li-Sn-Cd; a lithium transition metal nitride; and silicon. A material in which an electroconductive material is attached to the surface of particles of a negative electrode active material by, for example, a mechanical modification method may be used. As the negative electrode active materials, one type thereof may be solely used, and two or more types thereof may also be used in combination.

Generally, the electrode active material may be particles formed of the material described above. The electrode active material preferably has a volume-average particle diameter within a particular range. Specifically, the volume-average particle diameter of the electrode active material is preferably 1 $\mu$m or more, more preferably 3 $\mu$m or more, and still more preferably 5 $\mu$m or more, and is preferably 50 $\mu$m or less, more preferably 40 $\mu$m or less, and still more preferably 35 $\mu$m or less. When the volume-average particle diameter of the electrode active material is within the above-described range, the internal resistance of the non-aqueous secondary battery can be effectively reduced.

The volume-average particle diameter of an electrode active material can be measured by the following method. A cumulative particle diameter distribution of the electrode active material is measured by a dry system using a laser diffraction/scattering particle diameter distribution measuring apparatus. The particle diameter at which the integrated value obtained by integrating from the small diameter side of the cumulative particle diameter distribution becomes 50% can be obtained as the volume-average particle diameter of the electrode active material. As a specific measurement method, the method described in <Method for measuring volume-average particle diameter of electrode active material> of Example described later may be adopted.

The amount of the electrode active material relative to 100% by weight of the mixture powder composition is preferably 80% by weight or more, more preferably 85% by weight or more, and still more preferably 90% by weight or more, and is preferably 99% by weight or less, more preferably 98.5% by weight or less, and still more preferably 98% by weight or less. When the amount of the electrode active material is within the above-described range, the internal resistance of the non-aqueous secondary battery can be effectively reduced.

As long as the advantageous effects of the present invention is not significantly impaired, the mixture powder composition may contain any optional component other than the binder powder and the electrode active material. Examples of the optional component may include an electroconductive material. Examples of the electroconductive material may include carbon black such as furnace black, acetylene black, and Ketjen Black (registered trademark); carbon nanotube; carbon nanohorn; electroconductive carbons such as graphene. Among these, carbon black is preferable, and acetylene black is more preferable. As the electroconductive materials, one type thereof may be solely used, and two or more types thereof may also be used in combination.

The electroconductive material is generally included in the form of particles in the mixture powder composition.

The amount of the electroconductive material is preferably 1 part by weight or more, preferably 10 parts by weight or less, and more preferably 5 parts by weight or less, relative to 100 parts by weight of the electrode active material.

The mixture powder composition may contain a solvent or may not contain a solvent. Preferably, the mixture powder composition may be a powder in a dry state, and thus preferably does not substantially contain a solvent. The amount of the solvent contained in the mixture powder composition is preferably 0% by weight to 1% by weight, more preferably 0% by weight to 0.5% by weight, still more preferably 0% by weight to 0.1% by weight, and particularly preferably less than 0.1% by weight.

The method for producing the mixture powder composition is not particularly limited. For example, the mixture powder composition may be produced by a method including mixing a binder powder and an electrode active material, and optional components such as an electroconductive material, as necessary. The mixing is preferably performed by dry mixing. "Dry mixing" refers to mixing in a state of being substantially free of a liquid, and specifically refers to mixing at a concentration of 99% by weight or more of a solid content (components other than the liquid) at the time of mixing.

Examples of specific methods of dry mixing may include a container stirring method using a mixing device (for example, a rocking mixer, a tumbler mixer, or the like) in which the container itself is shaken, rotated, or vibrated; a mechanical stirring method using a mixing device (for example, a horizontal cylindrical mixer, a V-type mixer, a ribbon mixer, a conical screw mixer, a high-speed flow mixer, a rotating disk mixer, and a high-speed rotating blade mixer) including, in a container, a rotating shaft disposed horizontally or vertically and a stirring member such as a blade, a rotating disc, or a screw attached to this rotation shaft for stirring; and an airflow stirring method using a swirling air flow with compressed air to mix the powder in a fluidized bed. These mixing methods may be performed solely, and two or more thereof may also be performed in combination. Furthermore, after dry mixing, crushing may be performed to the extent that the aggregation is loosened by a crusher such as a mortar. By dry mixing, the dispersion state of the mixture powder composition is maintained well, and thus various physical properties such as coating accuracy can be improved.

<Electrode for non-aqueous secondary battery>

An electrode for a non-aqueous secondary battery according to an embodiment of the present invention includes a current collector and an electrode active material layer formed of the above-described mixture powder composition on the current collector. Therefore, the electrode active material layer usually includes the above-described mixture powder composition. Hereinafter, an electrode for a non-aqueous secondary battery may be simply referred to as an "electrode".

The material of the current collector is preferably an material having electroconductivity and electrochemical durability. Specific examples of the material of the current collector may include a metal, carbon, and an electroconductive macromolecule. The metal is preferable. Examples of the metal may include copper, aluminum, platinum, nickel, tantalum, titanium, stainless steel, and alloys thereof. Among these, copper, aluminum, and aluminum alloy are preferable from the viewpoint of electroconductivity and withstand voltage. When high withstand voltage is required, high-purity aluminum disclosed in Japanese Patent Application Laid-Open No. 2001-176757 A may be preferably used. Among these, aluminum is preferable as the material of the current collector used for a positive electrode, and copper is preferable as the material of the current collector used for a negative electrode. As these materials, one type thereof may be solely used, and two or more types thereof may also be used in combination.

The current collector generally has a film-shape or sheet-shape. The thickness of the current collector may be appropriately selected depending on the purpose of use. The thickness is preferably 1 $\mu$m or more, more preferably 5 $\mu$m or more, and still more preferably 10 $\mu$m or more, and is preferably 200 $\mu$m or less, more preferably 100 $\mu$m or less, and still more preferably 50 $\mu$m or less.

The electrode active material layer is formed of the above-described mixture powder composition. Therefore, the electrode active material layer includes the electrode active material and the particulate polymer, and further includes optional components such as an electroconductive material, as necessary. In the electrode active material layer, the particles of the electrode active material are bonded to each other, the particles of the electroconductive material are bonded to each other, and the particles of the electrode active material and the particles of the electroconductive material are bonded to each other by the particulate polymer. In the electrode active material layer, the particulate polymer, the electrode active material, and optional components such as the electroconductive material may maintain the particle shape that has been had in the mixture powder composition, and may be deformed by heat and pressure that may be applied in the step of forming the electrode active material layer. Generally, the electrode active material and the electroconductive material maintain their particle shapes that has been had in the mixture powder composition. The particulate polymer may be deformed by heat and pressure.

The amount of the electrode active material layer per unit area is not particularly limited. The amount thereof is preferably 10 mg/cm$^2$ or more, more preferably 15 mg/cm$^2$ or more, and still more preferably 20 mg/cm$^2$ or more, and is

preferably 35 mg/cm$^2$ or less, more preferably 30 mg/cm$^2$ or less, and still more preferably 25 mg/cm$^2$ or less.

The density of the electrode active material layer is not particularly limited. The density thereof is preferably 2.5 g/cm$^3$ or more, more preferably 3.0 g/cm$^3$ or more, and still more preferably 3.3 g/cm$^3$ or more, and is preferably 4.0 g/cm$^3$ or less, more preferably 3.8 g/cm$^3$ or less, and still more preferably 3.6 g/cm$^3$ or less.

The thickness of the electrode active material layer is not particularly limited. The thickness thereof is preferably 30 $\mu$m or more, more preferably 50 $\mu$m or more, and still more preferably 60 $\mu$m or more, and is preferably 100 $\mu$m or less, more preferably 90 $\mu$m or less, and still more preferably 80 $\mu$m or less.

The electrode according to the present embodiment can be produced by a method including a step of forming an electrode active material layer from the above-described mixture powder composition. Usually, a layer of the mixture powder composition is formed by an appropriate method, so that an electrode active material layer can be formed as a layer of the mixture powder composition. The formation of the electrode active material layer from the mixture powder composition is preferably performed in a dry system. Herein, the mode of forming the electrode active material layer from the mixture powder composition "in a dry system" means that the electrode active material layer is formed by the mixture powder composition in a powdery form, and the mixture powder composition may contain a solvent as long as the mixture powder composition can be in a powdery form. In an example, when the electrode active material layer is formed in a dry system, it is preferable to form the electrode active material layer without mixing a liquid such as a solvent with the mixture powder composition.

The method for producing an electrode may include, for example, a step of forming an electrode active material layer by forming the mixture powder composition into a layer, and a step of laminating the obtained electrode active material layer with a current collector. As a specific example, an electrode may be produced by a method including a step of supplying the mixture powder composition to a roll-type pressure molding apparatus that includes a pair of rolls and pressure-molding the mixture powder composition by the pair of rolls to form an electrode active material layer, and a step of laminating the electrode active material layer with a current collector. As another specific example, an electrode may be produced by a method including a step of filling the mixture powder composition into a mold and pressure-molding the mixture powder composition to form an electrode active material layer, and a step of laminating the electrode active material layer with a current collector. As yet another specific example, an electrode may be produced by a method including a step of applying the mixture powder composition onto a suitable support (for example, a support sheet) and performing a heating treatment and a pressing treatment as necessary to form an electrode active material layer, a step of laminating the electrode active material layer with a current collector, and a step of removing the support.

From the viewpoint of efficiently producing the electrode by omitting the lamination of the electrode active material layer and the current collector, the method for producing the electrode preferably includes a step of forming the electrode active material layer on the current collector. For example, the electrode active material layer can be formed on the current collector by forming the mixture powder composition into a layer on the current collector. Therefore, the number of steps can be reduced by omitting the step of laminating the electrode active material layer with the current collector.

As a specific example, the method for producing an electrode may include forming an electrode active material layer on a current collector by supplying a current collector and the mixture powder composition to pass between a pair of rolls in a roll-type pressure molding apparatus that includes the pair of rolls. In this method, the mixture powder composition is pressure-molded by the pair of rolls while the current collector is sent out through the pair of rolls, so that the electrode active material layer is formed on the current collector. In this case, from the viewpoint of enhancing adhesive strength between the electrode active material layer and the current collector, the roll temperature is preferably Tg + 10°C or higher, more preferably Tg + 30°C or higher, and still more preferably Tg + 40°C or higher, and is preferably Tg + 120°C or lower, more preferably Tg + 100°C or lower, and still more preferably Tg + 80°C or lower. Herein, Tg represents the glass transition temperature of the particulate polymer. In an example, the roll temperature may be preferably 25°C or higher, more preferably 50°C or higher, and still more preferably 80°C or higher, and is preferably 200°C or lower, more preferably 150°C or lower, and still more preferably 120°C or lower. In addition, the press line pressure between the rolls is preferably 10 kN/m or more, more preferably 200 kN/m or more, and still more preferably 500 kN/m or more, and is preferably 2000 kN/m or less, more preferably 1500 kN/m or less, and still more preferably 1200 kN/m or less, from the viewpoint of improving uniformity of the thickness of the electrode active material layer. Furthermore, the molding speed at the time of pressure-molding is preferably 0.1 m/minute or more, and more preferably 4 m/minute or more, and is preferably 20 m/minute or less, and more preferably 10 m/minute or less.

As another specific example, a method for producing an electrode may include applying the mixture powder composition onto a current collector to form an electrode active material layer. The applying of the mixture powder composition may be performed by, for example, an electrostatic coating method. The electrostatic coating method is a method in which the mixture powder composition to which a charging device has applied an electric charge is applied onto a current collector, so that the mixture powder composition can be efficiently fixed to the current collector by electrostatic attraction. In the electrostatic coating method described above, from the viewpoint of efficiently fixing the mixture powder composition by increasing the electrostatic attraction, the current collector may be grounded or the current collector may be charged to a polarity opposite with respect to that of the mixture powder composition. In addition, the applying of the mixture powder composition is generally performed using a coating apparatus separated from the current collector. For example, the mixture powder composition may be applied onto the current collector by dropping the mixture powder composition from a nozzle provided above the current collector with reference to the gravitational direction. Furthermore, for example, the mixture powder composition may be applied onto the current collector using an injector (for example, a spray gun) capable of jetting the mixture powder composition by the pressure of a gas such as air. Usually, an electric charge is given to the mixture powder composition in a coating apparatus such as the nozzle and the injector.

After the electrode active material layer is formed by applying the mixture powder composition onto the current collector, a thickness adjusting step of making the thickness of the electrode active material layer uniform may be performed. For example, the electrode active material layer may be evened with a blade to make the thickness uniform.

After the electrode active material layer is formed by applying the mixture powder composition onto the current collector, the current collector and the electrode active material layer may be subjected to a heating treatment. By the heating treatment, the particulate polymer in the mixture powder composition applied onto the current collector can be effectively adhered to the current collector, the electrode active material, and the optional component such as the electroconductive material. Therefore, adhesive strength between the current collector and the electrode active material layer can be increased. Moreover, the mechanical strength of the electrode active material layer can be increased.

After the electrode active material layer is formed by applying the mixture powder composition onto the current collector, the electrode active material layer may be subjected to a pressing treatment. Since the density of the electrode active material layer can be increased by the pressing treatment, capacity of the electrode can be increased.

Generally, heating treatment and pressing treatment are performed by causing the current collector and the electrode active material layer to pass between a pair of heated rolls. In this case, the heating treatment temperature (roll temperature) is preferably Tg + 10°C or higher, more preferably Tg + 30°C or higher, and still more preferably Tg + 40°C or higher, and is preferably Tg + 120°C or lower, more preferably Tg + 100°C or lower, and still more preferably Tg + 80°C or lower, from the viewpoint of increasing adhesion strength between the electrode active material layer and the current collector. Herein, Tg represents the glass transition temperature of the particulate polymer. In addition, the pressing pressure (press line pressure between rolls) is preferably 10 kN/m or more, more preferably 200 kN/m or more, and still more preferably 500 kN/m or more, and is preferably 2000 kN/m or less, more preferably 1500 kN/m or less, and still more preferably 1200 kN/m or less, from the viewpoint of improving uniformity of the thickness of the electrode active material layer. Furthermore, the traveling speed of the current collector and the electrode active material layer passing between the rolls is preferably 0.1 m/minute or more, more preferably 3 m/minute or more, and still more preferably 4 m/minute or more, and is preferably 50 m/minute or less, more preferably 20 m/minute or less, and still more preferably 10 m/minute or less.

The electrode including the current collector and the electrode active material layer can be produced by the above-described production method. The method for producing the electrode may further include an optional step. For example, from the viewpoint of reducing the fluctuation in the thickness of the electrode or increasing the density of the electrode active material layer to further increase the capacity, a post-pressing treatment may be further performed as necessary. The method of the post-pressing treatment is preferably a roll pressing method. In the roll pressing method, the electrode is passed between two rolls arranged in parallel to each other to press the electrode. Herein, the temperature of the roll may be adjusted by heating or cooling as necessary.

<Non-aqueous secondary battery>

A non-aqueous secondary battery according to an embodiment of the present invention includes the electrode according to the above-described embodiment. Generally, such a non-aqueous secondary battery includes a positive electrode, a negative electrode, and a non-aqueous electrolyte solution, and includes the electrode according to the above-described embodiment as at least one of the positive electrode and the negative electrode. Therefore, in the non-aqueous secondary battery, the positive electrode may be the electrode according to the above-described embodiment, the negative electrode may be the electrode according to the above-described embodiment, and both the positive electrode and the negative electrode may be the electrode according to the above-described embodiment.

As the non-aqueous electrolyte solution, for example, an electrolyte solution in which a supporting electrolyte is dissolved in a non-aqueous solvent may be used. The supporting electrolyte is preferably a lithium salt. Examples of lithium salts may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among these, $LiPF_6$, $LiClO_4$, and $CF_3SO_3Li$ that are easily soluble in solvents and exhibit a high degree of dissociation are preferable. As the supporting electrolytes, one type thereof may be solely used, and two or more types thereof may also be used in combination. Generally, the higher the degree of dissociation of the supporting electrolyte is, the higher the ionic conductivity tends to be.

The concentration of the supporting electrolyte is preferably set in a range of 0.5 mol/liter to 2.5 mol/liter depending on the type of the supporting electrolyte. Since the ionic conductivity can be increased with the concentration of the supporting electrolyte falling within such a range, the charging characteristics and the discharging characteristics of the non-aqueous secondary battery can be improved.

The non-aqueous solvent used in the non-aqueous electrolyte solution is not particularly limited as long as it can dissolve the supporting electrolyte. Examples of the non-aqueous solvent may include a carbonate solvent such as dimethyl carbonate (DMC), ethylene carbonate (EC), diethyl carbonate (DEC), propylene carbonate (PC), butylene carbonate (BC), and methyl ethyl carbonate (MEC); an ester solvent such as $\gamma$-butyrolactone and methyl formate; an ether solvent such as 1,2-dimethoxyethane and tetrahydrofuran; a sulfur-containing compound solvent such as sulfolane and dimethyl sulfoxide; and an ionic liquid also used as a supporting electrolyte. Among these, a carbonate solvent is preferable because the dielectric constant is high and the stable electric potential region is wide. As the non-aqueous solvents, one type thereof may be solely used, and two or more types thereof may also be used in combination. Generally, the lower the viscosity of the non-aqueous solvent is, the higher the ionic conductivity becomes. The higher the dielectric constant is, the higher the solubility of the supporting electrolyte becomes. Since both characteristics are in a trade-off relationship, it is preferable to use the non-aqueous solvent by adjusting the ionic conductivity according to the type and mixing ratio of the solvent. In addition, a non-aqueous solvent in which all or part of hydrogen atoms are replaced with fluorine atoms may be used either in combination or as the all solvent.

The non-aqueous electrolyte solution may contain an optional additive in combination with the supporting electrolyte and the non-aqueous solvent. Examples of the optional additives may include a carbonate-based compound such as vinylene carbonate (VC); a sulfur-containing compound such as ethylene sulfite (ES); and a fluorine-containing compound such as fluoroethylene carbonate (FEC). As the additives, one type thereof may be solely used, and two or more types thereof may also be used in combination.

The non-aqueous secondary battery may further include a separator. Examples of the separator may include a microporous film or a nonwoven fabric formed of a resin such as a polyolefin resin or an aromatic polyamide resin; and a porous resin coating film containing an inorganic ceramic powder. Specific examples of the separator may include a microporous film formed of a resin such as a polyolefin-based polymer (for example, polyethylene, polypropylene, polybutene, and polyvinyl chloride) and a mixture or copolymer thereof; a microporous film formed of a resin such as polyethylene terephthalate, polycycloolefin, polyether sulfone, polyamide, polyimide, polyimide amide, polyaramide, polycycloolefin, nylon, and polytetrafluoroethylene; a fabric material woven with fibers of a polyolefin-based resin or a nonwoven fabric of the fibers; and an aggregate of insulating material particles. Among these, a microporous film formed of a polyolefin-based resin is preferable from the viewpoint that the film thickness of the separator as a whole can be reduced and the capacity per volume can be improved by increasing the ratio of the active material in the non-aqueous secondary battery.

The thickness of the separator is preferably 1.0 $\mu$m or more, and more preferably 3 $\mu$m or more, and is preferably 40 $\mu$m or less, more preferably 30 $\mu$m or less, and still more preferably 25 $\mu$m or less, from the viewpoint of reducing the internal resistance of the separator in the non-aqueous secondary battery and the viewpoint of excellent workability in producing the non-aqueous secondary battery.

The non-aqueous secondary battery according to the present embodiment can have a small internal resistance. The internal resistance of the non-aqueous secondary battery may be evaluated by examining the DCR (direct current resistance) of the non-aqueous secondary battery at 25°C. Specifically, the smaller the DCR (direct current resistance) of the non-aqueous secondary battery is, the smaller the internal resistance of the non-aqueous secondary battery is. The DCR (direct current resistance) of the non-aqueous secondary battery may be measured by the method described in <Method for evaluating internal resistance> of Examples described later.

Examples of the method for producing a non-aqueous secondary battery may include a method including superposing a positive electrode and a negative electrode with each other via a separator, winding or folding them according to a battery shape, placing them in a battery container, filling the battery container with an electrolyte solution, and sealing the battery container. Further, an expanded metal; an overcurrent preventive element such as a fuse or a PTC element; and a lead plate, or the like may be included as needed to prevent pressure-rise inside the battery and overcharge/discharge. The shape of the non-aqueous secondary battery may be any of, for example, a coin type, a button type, a sheet type, a cylindrical type, a square, and a flat type. The material of the battery container is preferably one that inhibits the intrusion of moisture into the inside of the battery, and examples thereof may include metal and a laminate made of aluminum, or the like.

Since the non-aqueous secondary battery does not use a slurry containing a large amount of a solvent in the processes for producing the mixture powder composition and the electrode, energy required for production can be reduced. Furthermore, continuous operation is easy, and the yield can be increased.

<Example>

Hereinafter, the present invention will be specifically described by illustrating Examples. The present invention is not limited to the Examples described below. The present invention may be optionally modified for implementation without departing from the scope of claims and its equivalents.

In the following description, "%" and "part" representing quantity are on the basis of weight, unless otherwise specified. The operation described below was performed under the conditions of normal temperature and normal pressure (at 25°C and 1 atm.) in the atmosphere, unless otherwise specified.

<Method for measuring average primary particle diameter D50 of particulate polymer contained in binder powder>

A binder powder was added to an 1% aqueous solution of sodium linear alkylbenzene sulfonate, and dispersed by ultrasonic waves to obtain a dispersion liquid in which the particulate polymer contained in the binder powder was dispersed. A cumulative particle diameter distribution of this dispersion liquid was measured by a Coulter counter (a particle diameter measuring instrument "Coulter Counter LS230" manufactured by Beckman Coulter, Inc.). The particle diameter at which the integrated value obtained by integrating from the small diameter side of the cumulative particle diameter distribution becomes 50% was obtained as the average primary particle diameter D50 based on the volume of the particulate polymer contained in the binder powder.

<Method for measuring volume-average particle diameter of electrode active material>

A cumulative particle diameter distribution of the electrode active material was measured by a dry system using a laser diffraction/scattering particle diameter distribution measuring apparatus ("Microtrac MT3200II" manufactured by Nikkiso Co., Ltd.). The particle diameter at which the integrated value obtained by integrating from the small diameter side of the cumulative particle diameter distribution became 50% was obtained as the volume-average particle diameter of the electrode active material.

<Measurement test of surface free energy>

The binder powder was molded by hot pressing to obtain a sheet sample. The hot pressing was performed with a sample of 0.1 g sandwiched between Teflon sheets (Naflon (registered trademark) PTFE tape TOMBO (registered trademark) No.9001 0.10 mm manufactured by Nichias Corporation). The hot pressing was performed under the conditions of a pressing temperature of 200°C, a pressing load 4.5 kN, and a pressing time of 1 minute. The thickness of the resulting sheet sample was 0.1 mm to 0.3 mm.

On the surface of the sheet sample, a droplet of water, a droplet of formamide, and a droplet of ethylene glycol were dropped, and the contact angle was measured for each. The contact angle was measured by the $\theta/2$ method. As a measuring device, a portable contact angle meter ("PCA-11" manufactured by Kyowa Interface Science Co., Ltd.) was used. The measurement was carried out under the conditions of a droplet volume of 2.0 $\mu$L and a measurement waiting time of 100 mS.

The measured contact angles of water, formamide, and ethylene glycol were used to calculate the dispersion component $\gamma_S^d$ and polar component $\gamma_S^p$ (unit: mJ/m$^2$) of the surface free energy $\gamma_S$ of the sheet samples by the OWRK method. The dispersion component $\gamma_L^d$ and polar component $\gamma_L^p$ of the surface free energies of water, formamide, and ethylene glycol used in the calculations are shown in Table 1 below.

<Table 1>

| <Table 1. Dispersion component and Polar component of Surface free energy of Liquids> | | |
|---|---|---|
| | dispersion component $\gamma_L^d$[mJ/m$^2$] | polar component $\gamma_L^p$ [mJ/m$^2$] |
| water | 21.8 | 51 |
| formamide | 32.4 | 25.8 |
| ethylene glycol | 29.4 | 18.3 |

<Method for evaluating internal resistance>

(Battery initial formation)

A lithium ion secondary battery was left at a temperature of 25°C for 5 hours after injection of the electrolyte solution. Next, the battery was charged to a cell voltage of 3.65 V using a constant current method at a temperature of 25°C and at a 0.2C rate, and then subjected to an aging treatment at a temperature of 60°C for 12 hours. Then, the battery was discharged to a cell voltage of 3.00 V using a constant current method at 25°C and at a 0.2C rate. Afterwards, the battery was charged with CC-CV (upper limit cell voltage: 4.20 V) at a 0.2C rate, and was discharged to a cell voltage of 3.00 V using the constant current method at a 0.2C rate. Charging and discharging at a 0.2C rate were repeated three times.

(IV Test)

In an environment of 25°C, CC discharge was performed on a battery to 3.00 V by a constant current method at a 0.2C rate. After that, a charging operation was performed at a 0.2C rate so that the state of charge (SOC) became 50%. The battery was allowed to stand for 600 seconds. The voltage at 600 seconds was defined as $V_0$.

Then, the battery was discharged for 10 seconds using a constant current method at a 0.5C rate (= $I_{0.5}$), and the voltage at 10 seconds was defined as $V_{0.5}$. After that, the battery was charged by an amount corresponding to the discharged electric quantity in the directly preceding step using the constant current method at a 0.2C rate. Next, the battery was discharged for 10 seconds using the constant current method at a 1.0C rate (= $I_{1.0}$), and the voltage at 10 seconds was defined as $V_{1.0}$. After that, the battery was charged by an amount corresponding to the discharged electric quantity in the directly preceding step using the constant current method at a 0.2C rate. Next, the battery was discharged for 10 seconds using the constant current method at a 1.5C rate (= $I_{1.5}$), and the voltage at 10 seconds was defined as $V_{1.5}$.

The values of ($I_{0.5}$, $V_{0.5}$), ($I_{1.0}$, $V_{1.0}$), and ($I_{1.5}$, $W_{1.5}$) were plotted on an xy coordinate plane (x,y), and a slope b of a regression line was determined by the following equation (M1) to serve as the value of DCR (direct current resistance). Thereby, the DCR was obtained.

&lt;Mathematical formula 2&gt;

$$b = \frac{\sum(x - \bar{x})(y - \bar{y})}{\sum(x - \bar{x})} \quad (M1)$$

When DCR of Example 1 was defined as 100, DCR relative values of respective Examples and Comparative Examples were calculated and evaluated according to the following criteria. The smaller the DCR relative value is, the smaller the IV resistance of the lithium-ion secondary battery is, which indicates that the internal resistance is reduced.

    A: DCR relative value is 103 or less.
    B: DCR relative value is more than 103 and 105 or less.
    C: DCR relative value is more than 105 and 110 or less.
    D: DCR relative value is more than 110.

<Example 1>

(1-1. Production of binder powder)

- Preparation of monomer composition -

65.5 parts of styrene as the aromatic monovinyl monomer, 24 parts of n-butyl acrylate as the (meth)acrylic acid alkyl ester monomer, and 10 parts of glycidyl methacrylate and 0.5 part of ethylene glycol dimethacrylate as the crosslinkable monomers were mixed to prepare a monomer composition.

- Preparation of metal hydroxide -

An aqueous magnesium chloride solution in which 10.0 parts of magnesium chloride was dissolved in 200 parts of ion-exchanged water and an aqueous sodium hydroxide solution in which 7.0 parts of sodium hydroxide was dissolved in 50 parts of ion-exchanged water were prepared. The aqueous sodium hydroxide solution was gradually added to the aqueous magnesium chloride solution under stirring to produce a colloidal dispersion liquid containing magnesium hydroxide as a metal hydroxide.

- Suspension polymerization -

A particulate polymer was prepared by a suspension polymerization method. Specifically, the monomer composition obtained as described above was added to the above-described colloidal dispersion liquid containing magnesium hydroxide, and the mixture was further stirred. After that, 3.0 parts of t-butylperoxy-2-ethylhexanoate ("PERBUTYL O" manufactured by NOF CORP.) as a polymerization initiator was further added to the colloidal dispersion liquid to obtain a mixed liquid. The resulting mixed liquid was subjected to high-shear agitation for 1 minute at a number of revolution of 12,000 rpm using an in-line emulsifying disperser ("CAVITRON" manufactured by Pacific Machinery & Engineering Co., Ltd.) to form droplets of the monomer composition in the colloidal dispersion liquid containing magnesium hydroxide.

The colloidal dispersion liquid in which droplets of the monomer composition were formed as described above was placed in a reaction vessel, and the temperature was raised to 90°C to carry out a polymerization reaction for 5 hours, thereby obtaining a dispersion liquid. The dispersion liquid was purified by decompression treatment at 90°C using an evaporator for 2 hours to obtain an aqueous dispersion liquid containing a particulate polymer.

- Washing, drying and classifying -

While the aqueous dispersion liquid containing the particulate polymer was stirred, sulfuric acid was added dropwise thereto at room temperature (25°C) to perform acid-washing until pH became 6.5 or lower. After that, a water washing treatment, which includes filtering to obtain an solid content, dehydration of the obtained solid content, and re-slurrying of the solid content by adding 500 parts of ion-exchanged water in this order, was repeated 10 times. After that, filtration separation was performed, and the obtained solid content was placed in a dryer, and dried at 40°C for 48 hours. The solid content after drying was classified using an ultrasonic sieve (mesh size 75 $\mu$m) to obtain a binder powder having a powdery form. The particulate polymer contained in the obtained binder powder was non-hollow particles having no hollow therein. The obtained binder powder was evaluated by the methods described above.

(1-2. Production of mixture powder composition)

Into a high-speed mixer (type FS2 manufactured by EARTHTECHNICA CO., LTD.,), 96.0 parts of NMC811 (LiNi$_{0.8}$Mn$_{0.1}$Co$_{0.1}$O$_2$, volume-average particle diameter was 15.0 $\mu$m) as a positive electrode active material, and 2.0 parts of carbon black ("Super C65" manufactured by Imerys S.A.) as an electroconductive material in a solid content equivalent were charged, and mixed under the conditions of 10°C, an agitator rotational speed of 2000 rpm, and a chopper rotational speed of 3500 rpm for 30 minutes. After that, 2 parts of the binder powder prepared above was added thereto, and mixed under the conditions of 10°C, an agitator rotational speed of 500 rpm, and a chopper rotational speed of 800 rpm for 30 minutes to obtain a powdery mixture powder composition.

(1-3. Production of positive electrode: Dry method (electrostatic coating))

Using an electrostatic screen printing machine ("T-1" manufactured by BERG Co., Ltd.), the above-described mixture powder composition was applied onto an aluminum foil (thickness: 15 $\mu$m) as a current collector to obtain a positive electrode raw film. The applying was performed so that the amount (coating basis weight) of the applied mixture powder composition per unit area of the current collector was 18 mg/cm$^2$. The positive electrode raw film was heat-roll-pressed (temperature: 130°C, load: 30 t) to obtain a positive electrode including a current collector and a positive electrode active material layer (density of the positive electrode active material layer: 3.3 g/cm$^3$).

(1-4. Production of negative electrode)

Into a 5-MPa pressure resistant container equipped with a stirrer, 63 parts of styrene, 34 parts of 1,3-butadiene, 2 parts of itaconic acid, 1 part of 2-hydroxyethyl acrylate, 0.3 part of t-dodecylmercaptan as a molecular weight regulator, 5 parts of sodium dodecylbenzenesulfonate as an emulsifier, 150 parts of ion-exchanged water, and 1 part of potassium persulfate as a polymerization initiator were charged, sufficiently stirred, and then heated to 55°C to initiate polymerization. When the monomer consumption reached 95.0%, the system was cooled to stop the reaction. To the aqueous dispersion containing the polymer thus obtained, a 5% aqueous sodium hydroxide solution was added to adjust pH to 8. After that, unreacted monomers were removed by heat and decompression distillation. Then, the mixture was cooled to a temperature of 30°C or lower to obtain an aqueous dispersion liquid (a binder composition for a negative electrode) containing a binder for a negative electrode.

Into a planetary mixer, 48.75 parts of artificial graphite (theoretical capacity: 360 mAh/g) as a negative electrode active material, 48.75 parts of natural graphite (theoretical capacity : 360 mAh/g), and 1 part of carboxymethyl cellulose in a solid content equivalent were charged. Furthermore, the mixture was diluted with ion-exchanged water so as to have a solid concentration of 60%, and then kneaded at a rotational speed of 45 rpm for 60 minutes. After that, 1.5 parts of the binder composition for a negative electrode obtained above was charged in a solid content equivalent, and kneaded at a rotational speed of 40 rpm for 40 minutes. Then, ion-exchanged water was added so that the viscosity became 3000 $\pm$ 500 mPa·s (measured at 25°C, and 60 rpm by a B-type viscometer), thereby preparing a slurry composition for a negative electrode.

The slurry composition for a negative electrode was applied with a comma coater onto a surface of a copper foil having a thickness of 10 $\mu$m, which was a current collector, so that the amount (coating basis weight) of the slurry composition per unit area of the current collector became 11 $\pm$ 0.5 mg/cm$^2$. After that, the copper foil coated with the slurry composition for a negative electrode was conveyed at a speed of 400 mm/min through an oven at a temperature of 80°C for 2 minutes and further through an oven at a temperature of 110°C for 2 minutes to dry the slurry composition for a negative electrode on the copper foil, thereby obtaining a negative electrode raw film. Then, the negative electrode raw film was roll-pressed under a linear pressure of 11 t (ton) in an environment at a temperature of 25 ± 3°C to obtain a negative electrode including the current collector and the negative electrode active material layer (a negative electrode active material layer having a density of 1.60 g/cm$^3$).

(1-5. Production of secondary battery)

A layered laminated cell (equivalent to an initial-designed discharge capacity of 30 mAh) was prepared using the above-described negative electrode and positive electrode, and a single-layer polypropylene separator ("#2500" manufactured by Celgard, LLC), placed in an aluminum packaging material, and vacuum-dried under the conditions of 60°C and for 10 hours. After that, a LiPF$_6$ solution (containing a mixed solvent of solvent: ethylene carbonate (EC)/diethyl carbonate (DEC) = 3/7 (volume ratio), and additive: 2% by volume (relative to the solvents) of vinylene carbonate) having a concentration of 1.0 M was filled as an electrolyte solution. Furthermore, in order to seal the opening of the aluminum packaging material, the aluminum packaging material was closed by heat sealing at a temperature of 150°C, thereby producing a lithium ion secondary battery.
The obtained lithium ion secondary battery was evaluated by the above-described methods.

<Example 2>

Production and evaluation of a binder powder, a mixture powder composition, a positive electrode, and a lithium ion secondary battery were carried out by the same method as that in Example 1 except that, in the preparation of the monomer composition of step (1-1), the amount of styrene as the aromatic monovinyl monomer was changed to 72.8 parts and the amount of n-butyl acrylate as the (meth)acrylic acid alkyl ester monomer was changed to 16.7 parts.

<Example 3>

- Emulsion polymerization method -

Into a 5-MPa pressure resistant container equipped with a stirrer, a monomer composition including 56 parts of methyl methacrylate and 18.8 parts of n-butyl acrylate as (meth)acrylic acid alkyl ester monomers, 5 parts of methacrylic acid as an ethylenically unsaturated carboxylic acid monomer, 20 parts of acrylonitrile (AN) as a cyano group-containing monomer, and 0.2 part of allyl methacrylate (AMA) as a crosslinkable monomer, 0.2 part of sodium dodecylbenzenesulfonate as an emulsifier, 150 parts of ion-exchanged water, and 0.3 part of ammonium persulfate as a polymerization initiator were charged, sufficiently stirred, and then heated to 60°C to initiate polymerization. When the polymerization conversion became 96%, the reaction was stopped by cooling to obtain an aqueous dispersion containing a particulate polymer. The particulate polymer thus obtained was non-hollow particles.

- Drying and classifying -

The aqueous dispersion obtained above were dried using a spray dryer ("ADL311-A" manufactured by Yamato Scientific Co., Ltd.) to obtain a powdery solid. Specifically, the aqueous dispersion was diluted with ion-exchanged water to 10% by weight, and the powdery solid was prepared at Inlet 110°C and under a flow rate condition of 3.0 g/min. The dried powdery solid was classified using an ultrasonic sieve (mesh size 75 μm) to obtain a binder powder having a powdery form. The particulate polymer contained in the obtained binder powder was non-hollow particles having no hollow therein.
The obtained binder powder was evaluated by the methods described above.
Production and evaluation of a binder powder, a mixture powder composition, a positive electrode, and a lithium ion secondary battery were carried out by the same manner as that in Example 1 except that, in step (1-2), the binder powder produced in Example 3 was used instead of the binder powder produced in Example 1.

<Example 4>

Production and evaluation of a binder powder, a mixture powder composition, a positive electrode, and a lithium ion secondary battery were carried out by the same method as that in Example 1 except that, in the preparation of the monomer composition of step (1-1), the amount of styrene as the aromatic monovinyl monomer was changed to 84.5 parts, and the amount of n-butyl acrylate as the (meth)acrylic acid alkyl ester monomer was changed to 5.0 parts.

<Example 5>

Production and evaluation of a binder powder, a mixture powder composition, a positive electrode, and a lithium ion secondary battery were carried out by the same method as that in Example 3 except that the amount of methyl methacrylate as the (meth)acrylic acid alkyl ester monomer was changed to 51 parts and the amount of methacrylic acid as the ethylenically unsaturated carboxylic acid monomer was changed to 10 parts.

<Example 6>

Production and evaluation of a binder powder, a mixture powder composition, a positive electrode, and a lithium ion secondary battery were carried out by the same method as that in Example 1 except that, in the suspension polymerization of step (1-1), the amount of magnesium chloride was changed from 10.0 parts to 5.0 parts and the amount of sodium hydroxide was changed from 7.0 parts to 3.5 parts.

<Example 7>

Production and evaluation of a binder powder, a mixture powder composition, a positive electrode, and a lithium ion secondary battery were carried out by the same method as that in Example 1 except that, in the suspension polymerization of step (1-1), the amount of magnesium chloride was changed from 10.0 parts to 3.0 parts and the amount of sodium hydroxide was changed from 7.0 parts to 2.1 parts.

<Example 8>

Production and evaluation of a binder powder, a mixture powder composition, a positive electrode, and a lithium ion secondary battery were carried out by the same method as that in Example 1 except that the binder powder was changed to a powder of polyvinylidene fluoride (PVDF, "KYNAR HSV900" manufactured by Arkema).

<Comparative Example 1>

Production and evaluation of a binder powder, a mixture powder composition, a positive electrode, and a lithium ion secondary battery were carried out by the same method as that in Example 1 except that, in the preparation of the monomer composition of step (1-1), the amount of styrene as the aromatic monovinyl monomer was changed to 0 parts, the amount of methyl methacrylate as the (meth)acrylic acid alkyl ester monomer was changed to 65.5 parts, and the amount of n-butyl acrylate was changed to 24 parts.

<Results>

The results of Examples and Comparative Example described above are shown in the following table 2. In the table 2 below, abbreviations have the following meanings:

$\gamma_S^d$: dispersion component of surface free energy of sheet sample obtained from binder powder.
$\gamma_S^p$: polar component of surface free energy of sheet sample obtained from binder powder.
D50: average primary particle diameter of particulate polymer contained in binder powder
DCR: relative value of direct current resistance of lithium ion secondary battery

<Table 2>

| <Table 2. Results of Examples and Comparative Examples> | | | | | |
|---|---|---|---|---|---|
| | $\gamma_S^p$ [mJ/m²] | $\gamma_S^d$ [mJ/m²] | $\gamma_S^p/\gamma_S^d$ | D50 [μm] | DCR |
| Example | | | | | |
| 1 | 2.20 | 18.1 | 0.122 | 5.00 | A |
| 2 | 0.63 | 30.8 | 0.020 | 5.00 | A |
| 3 | 20.00 | 25.0 | 0.800 | 0.50 | A |
| 4 | 0.00 | 33.2 | 0.000 | 5.00 | A |

(continued)

| <Table 2. Results of Examples and Comparative Examples> | | | | | |
|---|---|---|---|---|---|
| | $\gamma_S^p$ [mJ/m$^2$] | $\gamma_S^d$ [mJ/m$^2$] | $\gamma_S^p/\gamma_S^d$ | D50 [$\mu$m] | DCR |
| Example | | | | | |
| 5 | 25.00 | 25.0 | 1.000 | 0.25 | B |
| 6 | 2.20 | 18.1 | 0.122 | 15.00 | A |
| 7 | 2.20 | 18.1 | 0.122 | 20.00 | B |
| 8 | 15.00 | 18.0 | 0.833 | 0.30 | C |
| Comparative Example | | | | | |
| 1 | 35.00 | 15.0 | 2.33 | 5.00 | D |

**Claims**

1. A binder powder for a non-aqueous secondary battery electrode, comprising a particulate polymer, wherein: when a measurement test in which the binder powder is hot-pressed to obtain a sheet sample and a surface free energy of the sheet sample is measured is performed, a dispersion component $\gamma_S^d$ and a polar component $\gamma_S^p$ of the surface free energy satisfy the following formula (1):

$$0 \le \gamma_S^p/\gamma_S^d \le 2 \quad (1).$$

2. The binder powder for a non-aqueous secondary battery electrode according to claim 1, wherein an average primary particle diameter of the particulate polymer is 0.5 $\mu$m or more and 15 $\mu$m or less.

3. The binder powder for a non-aqueous secondary battery electrode according to claim 1, wherein the dispersion component $y_S^d$ and the polar component $\gamma_S^p$ of the surface free energy satisfy the following formula (2):

$$0 \le \gamma_S^p/\gamma_S^d \le 0.8 \quad (2).$$

4. The binder powder for a non-aqueous secondary battery electrode according to claim 1, wherein the polar component $\gamma_S^p$ of the surface free energy is 32 mJ/m$^2$ or less.

5. A mixture powder composition comprising the binder powder for a non-aqueous secondary battery electrode according to any one of claims 1 to 4, and an electrode active material.

6. An electrode for a non-aqueous secondary battery, comprising a current collector, and an electrode active material layer formed of the mixture powder composition according to claim 5 on the current collector.

7. A non-aqueous secondary battery comprising the electrode for a non-aqueous secondary battery according to claim 6.

8. A method for producing an electrode for a non-aqueous secondary battery, the method comprising a step of forming an electrode active material layer from the mixture powder composition according to claim 5 in a dry system.

## INTERNATIONAL SEARCH REPORT

| International application No. |
| --- |
| **PCT/JP2024/008468** |

**A.    CLASSIFICATION OF SUBJECT MATTER**

*H01M 4/62*(2006.01)i; *H01M 4/13*(2010.01)i; *H01M 4/139*(2010.01)i
FI:    H01M4/62 Z; H01M4/139; H01M4/13

According to International Patent Classification (IPC) or to both national classification and IPC

**B.    FIELDS SEARCHED**

Minimum documentation searched (classification system followed by classification symbols)

H01M4/62; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2009-146752 A (NISSAN MOTOR CO., LTD.) 02 July 2009 (2009-07-02)<br>paragraphs [0009], [0030], [0031], example 1 | 1-8 |
| A | WO 2021/085201 A1 (SANYO ELECTRIC CO., LTD.) 06 May 2021 (2021-05-06)<br>entire text, all drawings | 1-8 |
| A | KR 10-2016-0071201 A (HYUNDAI MOTOR COMPANY) 21 June 2016 (2016-06-21)<br>entire text | 1-8 |
| A | CN 111384369 A (NORTHERN ALTAIR NANOTECHNOLOGIES CO., LTD.) 07 July 2020<br>(2020-07-07)<br>paragraph [0111] | 1-8 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2024** | **28 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/008468**

| Patent document cited in search report | | | Publication date (day/month/year) | Patent family member(s) | Publication date (day/month/year) |
|---|---|---|---|---|---|
| JP | 2009-146752 | A | 02 July 2009 | (Family: none) | |
| WO | 2021/085201 | A1 | 06 May 2021 | US 2022/0376258 A1 entire text, all drawings CN 114616708 A | |
| KR | 10-2016-0071201 | A | 21 June 2016 | (Family: none) | |
| CN | 111384369 | A | 07 July 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018034093 A
- US 20200052270
- JP 6327249 B
- US 20200144591
- JP 2001176757 A

**Non-patent literature cited in the description**

- **KAELBLE,D.H.** ; **UY,K.C.** *J. Adhesion*, 1970, vol. 2, 50